# EUROPÄISCHE PATENTSCHRIFT

(11) **EP 2 946 111 B1**
(45) Veröffentlichungstag und Bekanntmachung des Hinweises auf die Patenterteilung: **15.03.2017**
(21) Anmeldenummer: 14700387.5
(22) Anmeldetag: 14.01.2014
(51) Int. Cl.: F04B 17/03, B60T 8/40, H02K 7/075, H02K 5/16, B60T 8/36

(54) **ANTRIEBSAGGREGAT**
DRIVE ASSEMBLY
BLOC MOTEUR

(30) Priorität: 16.01.2013 DE 102013200545
(43) Veröffentlichungstag der Anmeldung: 25.11.2015
(73) Patentinhaber: Continental Teves AG & Co. oHG, 60488 Frankfurt (DE)
(72) Erfinder: VOGEL, Günther, 63303 Dreieich (DE); LENZ, René, 64546 Mörfelden-Walldorf (DE); HINZ, Axel, 61267 Neu-Anspach (DE)
(86) Internationale Anmeldenummer: PCT/EP2014/050518
(87) Internationale Veröffentlichungsnummer: WO 2014/111352

(56) Entgegenhaltungen:
- DE-A1- 19 642 133
- DE-A1- 19 706 124
- DE-A1-102009 048 109

## Beschreibung

Die Erfindung betrifft ein Antriebsaggregat, insbesondere für eine schlupfgeregelte Bremsanlage, nach dem Oberbegriff des Patentanspruchs 1.

Ein Antriebsaggregat der vorgenannten Art ist bereits aus der DE 10 2009 048 109 A1 bekannt. Das Antriebsaggregat besteht aus einem blockförmigen Aufnahmekörper, mit einer Motoraufnahmebohrung für einen Elektromotor, die lotrecht in eine Stirnfläche des blockförmigen Aufnahmekörpers gerichtet ist, sowie mit einem Motorgehäuse zur Aufnahme eines für eine Motorwelle des Elektromotors vorgesehenen Lagers, das in einem stirnseitigen Motorgehäuseabschnitt fixiert ist, der sich zur Motoraufnahmebohrung erstreckt. Zur Befestigung des Elektromotors am Aufnahmekörpers ist das Motorgehäuse mit drei Laschen versehen, die beim Anliegen an der Stirnseite des Aufnahmekörpers mittels dreier Halteschrauben am Aufnahmekörper befestigt werden. Dieser Aufbau stellt aufgrund einer Vielzahl von erforderlichen Herstellschritten einen relativ großen Aufwand dar und erlaubt überdies auch nicht eine Verringerung des Überstands des Motorgehäuses am Aufnahmekörper.

Es ist daher die Aufgabe der Erfindung, ein Antriebsaggregat der angegebenen Art derart weiter zu entwickeln, dass die vorgenannten Nachteile vermieden werden.

Diese Aufgabe wird für ein Antriebsaggregat der angegebenen Art mit den kennzeichnenden Merkmalen des Anspruchs 1 gelöst.

Weitere Merkmale und Vorteile der Erfindung werden im Nachfolgenden anhand der Beschreibung zweier Ausführungsbeispiele anhand von Zeichnungen erläutert.

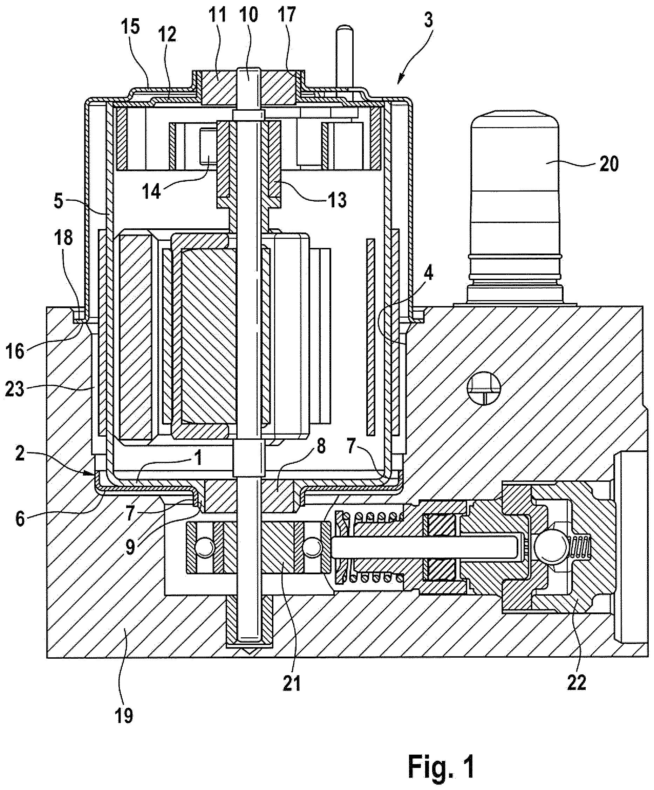

Die Figur 1 zeigt ein für schlupfgeregelte Kraftradbremsanlagen verwendetes Antriebsaggregat im Längsschnitt, mit einem blockförmigen Aufnahmekörper 19, in dessen Stirnfläche eine Motoraufnahmebohrung 4 für einen Elektromotor 3 lotrecht einmündet. Weiterhin zeigt die Abbildung ein zum Elektromotor 3 gehörendes Motorgehäuse 5, das eine im Wesentlichen hohlzylindrische Kontur aufweist, das ein für eine Motorwelle 10 des Elektromotors 3 vorgesehenen Lager 8 in einem stirnseitigen Motorgehäuseabschnitt 1 aufnimmt. Das Motorgehäuse 5 ist näherungsweise bis zur Hälfte seiner Länge in der Motoraufnahmebohrung 4 versenkt, sodass es nur einen geringen Überstand oberhalb der Stirnfläche des Aufnahmekörpers 19 aufweist, wobei der Überstand dem Überstand eines neben dem Motorgehäuse 5 angeordneten Ventildoms 20 entspricht, der ein Bestandteil eines elektromagntisch betätigbaren Druckmodulationsventils ist. Diese höhenidentische Anordnung hat den Vorteil, dass nach dem Aufsetzen einer Magnetspule auf den Ventildom 20, die elektrischen Kontakte der Magnetspule und die elektrischen Kontakte des Elektromotors 3 unmittelbar mit einer horizontal oberhalb des Elektromotors 3 und der Magnetspule angeordneten Platine eines elektronischen Steuergeräts besonders einfach in Eingriff gebracht werden können, womit sich ein kompakter Gesamtaufbau ergibt, da das nicht abgebildete Steuergerät als Bestandteil einer Abdeckkappe die Oberseite des Aufnahmekörpers 19 flüssigkeitsdicht umschließt. Wie aus der Abbildung gut zu erkennen ist, erstreckt sich der stirnseitige Motorgehäuseabschnitt 1 mit der sich daran anschließenden Mantelfläche des Motorgehäuses 5 in die Motoraufnahmebohrung 4 mit einem Radialspiel, wobei vorteilhaft am stirnseitigen Motorgehäuseabschnitt 1 ein Motorhalter 2 befestigt ist, der vollständig in der Motoraufnahmebohrung 4 versenkt ist, sodass die Fixierung und Zentrierung des Elektromotors 3 innerhalb der Motoraufnahmebohrung 4 durch den Motorhalter 2 gewährleistet ist.

Der Motorhalter 2 ist als Halteplatte besonders einfach ausgeführt, wobei die Halteplatte die gegenüber dem Außendurchmesser des Motorgehäuses 5 an ihrem Außenumfang einen radialen Überstand 6 aufweist, der abbildungsgemäß mittels einer Presspassung mit der Innenwand der Motoraufnahmebohrung 4 im Eingriff steht. In einer nicht dargestellten Frontalansicht offenbart sich der Motorhalter 2 als Ringscheibe, die abbildungsgemäß zur Fixierung in der Motoraufnahmebohrung 4 sowohl an ihrem radialen Überstand 6 als auch zur Fixierung am stirnseitigen Motorgehäuseabschnitt 1 an ihrem Innenumfang einen mit einer Presspassung versehenen Bund 7 aufweist. Der ringscheibenförmige Motorhalter 2 lässt sich mittels weniger Bearbeitungsschritte besonders kostengünstig durch Stanzen und Tiefziehen aus einem Dünnblech herstellen.

In vorliegendem Ausführungsbeispiel ist der am Innenumfang des ringscheibenförmigen Motorhalters 2 vorgesehene Bund 7 somit unmittelbar an einem das Lager 8 umgreifenden Vorsprung 9 reibschlüssig fixiert, der ein Bestandteil des stirnseitigen Motorgehäuseabschnitts 1 bildet. Bei Wunsch oder Bedarf kann der Bund 7 ebenso unmittelbar das Lager 8 umgreifen, sofern auf den Vorsprung 9 verzichtet wird, bzw. wenn das Lager 8 einen hinreichend aus dem stirnseitigen Motorgehäuseabschnitt 1 hervor steht.
Wie weiterhin aus der Figur 1 hervor geht, ist auf der zum Motorgehäuseabschnitt 1 entgegengesetzten Stirnseite des Elektromotors 3 ein weiterer stirnseitiger Motorgehäusesabschnitt 12 vorgesehen, der die Motorwelle 10 in einem weiteren Lager 11 aufnimmt. Der weitere stirnseitige Motorgehäusesabschnitt 12 ist überdies zur Aufnahme mehrerer Bürsten 14 in Bürstenköcher als Bürstenträgerplatte ausgebildet, sodass der aus der Motoraufnahmebohrung 4 hervorstehende Motorgehäuseabschnitt 12 eine multifunktionale Einheit bildet. Angrenzend an das weitere Lager 11 trägt die Motorwelle 10 in einem geringen axialen Abstand zum Lager 11 einen Kommutator 13, an dem die Bürsten 14 der Bürstenträgerplatte unter Federdruck anliegen.

Über den weiteren stirnseitigen Motorgehäuseabschnitt 12, der mit dem rohrförmigen Abschnitt des Motorgehäuses 5 eine Einheit bildet, ist eine mit dem weiteren Motorgehäuseabschnitt 12 im Eingriff stehende Fixierkappe 15 übergestülpt, die sich bis zur axialen Kontaktierung einer Gehäusestufe 16 in die Motoraufnahmebohrung 4 erstreckt. Die Fixierkappe 15 weist im Bereich des stirnseitigen weiteren Motorgehäuseabschnitts 12 eine Öffnung 17 auf, in der das weitere Lager 11 mit dem das weitere Lager 11 umgreifenden Motorgehäuseabschnitt 12 gehalten ist.

Die das Motorgehäuse 5 wenigstens zur Hälfte glockenförmig umschließende Fixierkappe 15 weist im Kontaktbereich der Gehäusestufe 16 einen radial nach außen gerichteten Rand 18 auf, der mittels einer plastischen Verdrängung des an die Motoraufnahmebohrung 4 angrenzenden Materials des Aufnahmekörpers 19 in Richtung der Gehäusestufe 16 form- als auch kraftschlüssig in der Motoraufnahmebohrung 4 fixiert ist.

Mittels der Fixierkappe 15 und der Halteplatte 2 ist somit eine sichere Befestigung des Elektromotors 3 in der Motoraufnahmebohrung 4 gewährleistet, um im vorliegenden Anwendungsfall über einen am unteren Ende der Motorwelle 10 befestigten Exzenter 21 den quer zur Motorwelle 10 in einer Pumpenbohrung geführten Pumpenkolben einer Radialkolbenpumpe 22 zu betätigen. Die exzenterseitige Halteplatte 2 zentriert hierbei den Elektromotor 3 im unteren Teil der Motoraufnahmebohrung 4 und stützt einen Teil des Motordrehmoments ab, wobei mittels der bis auf Anschlag an der Gehäusestufe 16 in die Motoraufnahmebohrung 4 eingeführte und verstemmte Fixierkappe 15 nicht nur der übrige Teil des Motordrehmoments aufgenommen wird, sondern auch die gewünschte Einbautiefe des Elektromotors 3 festgelegt ist, wozu zum Ausgleich von Einbautoleranzen zwischen der Halteplatte 2 und dem Boden der Motoraufnahmebohrung 4 ein hinreichendes Axialspiel vorgesehen ist.

Zwecks Montageerleichterung weist die Motoraufnahmebohrung 4 zwischen ihrer Gehäusestufe 16 und dem im unteren Endabschnitt der Motoraufnahmebohrung 4 gelegenen Pressbereich der Halteplatte 2 einen gegenüber dem Pressbereich geringfügig gegenüber dem Außendurchmesser der Halteplatte 2 erweiterten Bohrungsabschnitt 23 auf, um den Elektromotor 3 nicht über den gesamten Tiefenbereich der Motoraufnahmebohrung 4 unter großem Kraftaufwand in den Aufnahmekörper 19 einpressen zu müssen.

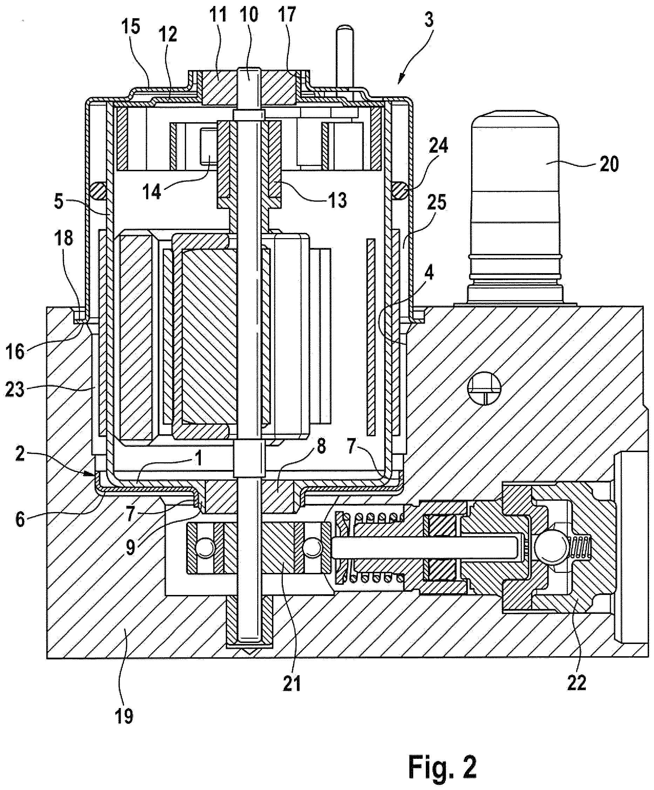

Das in Figur 2 abgebildete Antriebsaggregat unterscheidet vom Antriebsaggregat nach Figur 1 dadurch, dass die Aufnahme des Motorgehäuseabschnitts 12 innerhalb der in der Fixierkappe 15 vorgesehenen Öffnung 17 mit einem Radialspiel erfolgt, sodass während des Überstülpens der Fixierkappe 15 vorteilhaft keine Kraftübertragung auf den Motorgehäuseabschnitt 12 erfolgt. Hierdurch ist eine Verformung des Motorgehäuses während der Montage der Fixierkappe 15 ausgeschlossen. Zwischen der Innenwandung der Fixierkappe 15 und der Außenwandung des weiteren Motorgehäuseabschnitts 12 ist ein Zwischenraum 25 vorgesehen, der sich entlang dem Motorgehäuse 5 bis in den Bohrungsabschnitt 23 des Aufnahmekörpers 19 erstreckt. Gemäß der Figur 2 ist in den Zwischenraum 25 ein elastisch verformbares Ringelement 24 eingespannt ist, in dem das Motorgehäuse 5 quasi elastisch in der Fixierkappe 15 gelagert ist. Es ergibt sich somit entfernt zur Fixierung des Elektromotors 3 im Motorhalter 2 eine elastische Lagerung des Motorgehäuses 4 in der Fixierkappe 15 mit schwingungs- und damit geräuschabsorbierenden Eigenschaften.

Alle weiteren aus der Figur 2 ersichtlichen, jedoch zu Figur 2 bisher explizit nicht beschriebenen Einzelheiten sind der Beschreibung des in Figur 1 abgebildeten Antriebsaggregats zu entnehmen.

### Bezugszeichenliste

- 1: Motorgehäuseabschnitt
- 2: Motorhalter
- 3: Elektromotor
- 4: Motoraufnahmebohrung
- 5: Motorgehäuse
- 6: Überstand
- 7: Bund
- 8: Lager
- 9: Vorsprung
- 10: Motorwelle
- 11: Lager
- 12: Motorgehäuseabschnitt
- 13: Kommutator
- 14: Bürste
- 15: Fixierkappe
- 16: Gehäusestufe
- 17: Öffnung
- 18: Rand
- 19: Aufnahmekörper
- 20: Ventildom
- 21: Exzenter
- 22: Radialkolbenpumpe
- 23: Bohrungsabschnitt
- 24: Ringelement
- 25: Zwischenraum

## Patentansprüche

1. Antriebsaggregat, insbesondere für eine schlupfgeregelte Bremsanlage,
- mit einer Motoraufnahmebohrung (4) für einen Elektromotor (3), die lotrecht in eine Stirnfläche eines blockförmigen Aufnahmekörpers (19) gerichtet ist,
- mit einem Motorgehäuse (5) zur Aufnahme eines für eine Motorwelle (10) des Elektromotors (3) vorgesehenen Lagers (8), das in einem stirnseitigen Motorgehäuseabschnitt (1) fixiert ist, der sich zur Motoraufnahmebohrung (4) erstreckt,
**dadurch gekennzeichnet, dass** am stirnseitigen Motorgehäuseabschnitt (1) ein Motorhalter (2) befestigt ist, der in der Motoraufnahmebohrung (4) versenkt ist, sodass der Motorhalter (2) den Elektromotor (3) innerhalb der Motoraufnahmebohrung (4) fixiert.

2. Antriebsaggregat nach Anspruch 1, **dadurch gekennzeichnet, dass** der Motorhalter (2) als Halteplatte ausgeführt ist, die gegenüber dem Außendurchmesser des Motorgehäuses (5) an ihrem Außenumfang einen radialen Überstand (6) aufweist, der vorzugsweise mittels einer Presspassung mit der Innenwand der Motoraufnahmebohrung (4) im Eingriff steht.

3. Antriebsaggregat nach Anspruch 1 oder 2, **dadurch gekennzeichnet, dass** der Motorhalter (2) als Ringscheibe ausgeführt ist, die zur Fixierung in der Motoraufnahmebohrung (4) sowohl an ihrem radialen Überstand (6) als auch zur Fixierung am stirnseitigen Motorgehäuseabschnitt (1) an ihrem Innenumfang einen Bund (7) aufweist.

4. Antriebsaggregat nach Anspruch 3, **dadurch gekennzeichnet, dass** der Motorhalter (2) durch Stanzen und Tiefziehen eines Dünnblechs hergestellt ist.

5. Antriebsaggregat nach Anspruch 3, **dadurch gekennzeichnet, dass** der am Innenumfang des ringscheibenförmigen Motorhalters (2) vorgesehene Bund (7) unmittelbar an einem das Lager (8) umgreifenden Vorsprung (9) reibschlüssig fixiert ist, der ein Bestandteil des stirnseitigen Motorgehäuseabschnitts (1) bildet.

6. Antriebsaggregat nach Anspruch 1, **dadurch gekennzeichnet, dass** auf der zum Motorgehäuseabschnitt (1) entgegengesetzten Stirnseite des Elektromotors (3) ein weiterer stirnseitiger Motorgehäusesabschnitt (12) vorgesehen ist, der vorzugsweise die Motorwelle (10) in einem weiteren Lager (11) aufnimmt.

7. Antriebsaggregat nach Anspruch 6, **dadurch gekennzeichnet, dass** der weitere stirnseitigen Motorgehäusesabschnitt (12) zur Aufnahme mehrerer Bürsten (14) in Bürstenköcher als Bürstenträgerplatte ausgebildet ist.

8. Antriebsaggregat nach Anspruch 6, **dadurch gekennzeichnet, dass** angrenzend an das weitere Lager (11) die Motorwelle (10) einen Kommutator (13) trägt, der mit mehreren Bürsten (14) einer Bürstenträgerplatte zusammenwirkt.

9. Antriebsaggregat nach Anspruch 6, **dadurch gekennzeichnet, dass** über den weiteren stirnseitigen Motorgehäuseabschnitt (12) eine Fixierkappe (15) übergestülpt ist, die sich bis zur axialen Kontaktierung einer Gehäusestufe (16) in die Motoraufnahmebohrung (4) erstreckt.

10. Antriebsaggregat nach Anspruch 9, **dadurch gekennzeichnet, dass** die Fixierkappe (15) im Bereich des weiteren stirnseitigen Motorgehäuseabschnitts (12) eine Öffnung (17) aufweist, in welche das weitere Lager (11) mit dem das weitere Lager (11) umgreifenden weiteren stirnseitigen Motorgehäuseabschnitt (12) ragt.

11. Antriebsaggregat nach Anspruch 10, **dadurch gekennzeichnet, dass** die Aufnahme des Motorgehäuseabschnitts (12) innerhalb der in der Fixierkappe (15) vorgesehenen Öffnung (17) mit einem Radialspiel erfolgt, sodass während des Überstülpens der Fixierkappe (15) keine Kraftübertragung auf den Motorgehäuseabschnitt (12) erfolgt.

12. Antriebsaggregat nach Anspruch 9, **dadurch gekennzeichnet, dass** zwischen der Innenwandung der Fixierkappe (15) und der Außenwandung des weiteren Motorgehäuseabschnitts (12) ein Zwischenraum (25) vorgesehen ist.

13. Antriebsaggregat nach Anspruch 12, **dadurch gekennzeichnet, dass** sich der Zwischenraum (25) entlang dem Motorgehäuse (5) bis in den Bohrungsabschnitt (23) des Aufnahmekörpers (19) erstreckt.

14. Antriebsaggregat nach Anspruch 12 oder 13, **dadurch gekennzeichnet, dass** in den Zwischenraum (25) eine elastisch verformbares Ringelement (24) eingespannt ist, in dem das Motorgehäuse (5) gelagert ist.

15. Antriebsaggregat nach Anspruch 10, **dadurch gekennzeichnet, dass** in der Öffnung (17) der Fixierkappe (15) das weitere Lager (11) und/oder der weitere stirnseitige Motorgehäuseabschnitt (12) spielfrei aufgenommen ist.

16. Antriebsaggregat nach Anspruch 9, **dadurch gekennzeichnet, dass** die Fixierkappe (15) im Kontaktbereich der Gehäusestufe (16) einen radial nach außen gerichteten Rand (18) aufweist, der mittels einer plastischen Verdrängung des an die Motoraufnahmebohrung (4) angrenzenden Materials des Aufnahmekörpers (19) in Richtung der Gehäusestufe (16) form- als auch kraftschlüssig in der Motoraufnahmebohrung (4) fixiert ist.

## Claims

1. Drive assembly, in particular for a slip-controlled brake system,
- having a motor location hole (4) for an electric motor (3), said hole being directed perpendicularly into an end face of a block-shaped mounting body (19),
- having a motor housing (5) for accommodating a bearing (8) provided for a motor shaft (10) of the electric motor (3), said bearing being fixed in an end-side motor housing section (1) which extends as far as the motor location hole (4),
**characterized in that** a motor holder (2) is secured on the end-side motor housing section (1), said motor holder being recessed into the motor location hole (4), with the result that the motor holder (2) fixes the electric motor (3) within the motor location hole (4).

2. Drive assembly according to Claim 1, **characterized in that** the motor holder (2) is embodied as a holding plate, which has a radial overlap (6) at its outer circumference relative to the outside diameter of the motor housing (5), said overlap preferably being in engagement with the inner wall of the motor location hole (4) by means of a press fit.

3. Drive assembly according to Claim 1 or 2, **characterized in that** the motor holder (2) is embodied as an annular disk, which has a collar (7) both on its radial overlap (6), for fixing in the motor location hole (4), and on its inner circumference, for fixing on the end-side motor housing section (1).

4. Drive assembly according to Claim 3, **characterized in that** the motor holder (2) is produced by punching and deep drawing a thin sheet.

5. Drive assembly according to Claim 3, **characterized in that** the collar (7) provided on the inner circumference of the motor holder (2) in the form of an annular disk is fixed by frictional engagement directly on a projection (9), which surrounds the bearing (8) and forms part of the end-side motor housing section (1).

6. Drive assembly according to Claim 1, **characterized in that** a further end-side motor housing section (12), which preferably accommodates the motor shaft (10) in a further bearing (11), is provided on the opposite end of the electric motor (3) from the motor housing section (1).

7. Drive assembly according to Claim 6, **characterized in that** the further end-side motor housing section (12) is designed as a brush carrier plate to accommodate a plurality of brushes (14) in brush holders.

8. Drive assembly according to Claim 6, **characterized in that**, adjoining the further bearing (11), the motor shaft (10) carries a commutator (13), which interacts with a plurality of brushes (14) of a brush carrier plate.

9. Drive assembly according to Claim 6, **characterized in that** a fixing cap (15), which extends into the motor location hole (4) as far as the axial contact with a housing step (16), is placed over the further end-side motor housing section (12).

10. Drive assembly according to Claim 9, **characterized in that** the fixing cap (15) has an opening (17) in the region of the further end-side motor housing section (12), into which opening the further bearing (11) projects with the further end-side motor housing section (12) surrounding the further bearing (11).

11. Drive assembly according to Claim 10, **characterized in that** the motor housing section (12) is accommodated with a radial clearance within the opening (17) provided in the fixing cap (15), with the result that there is no transmission of force to the motor housing section (12) while the fixing cap (15) is being placed on.

12. Drive assembly according to Claim 9, **characterized in that** an interspace (25) is provided between the inner wall of the fixing cap (15) and the outer wall of the further motor housing section (12).

13. Drive assembly according to Claim 12, **characterized in that** the interspace (25) extends along the motor housing (5) into the hole section (23) of the mounting body (19).

14. Drive assembly according to Claim 12 or 13, **characterized in that** an elastically deformable ring element (24), in which the motor housing (5) is mounted, is clamped into the interspace (25).

15. Drive assembly according to Claim 10, **characterized in that** the further bearing (11) and/or the further end-side motor housing section (12) is accommodated without a clearance in the opening (17) of the fixing cap (15).

16. Drive assembly according to Claim 9, **characterized in that** the fixing cap (15) has, in the contact region of the housing step (16), a rim (18), which is directed radially outward and is fixed positively and also nonpositively in the motor location hole (4) by means of plastic displacement, in the direction of the housing step (16), of the material of the mounting body (19) adjoining the motor location hole (4).

## Revendications

1. Bloc moteur, notamment pour un système de freinage à régulation du platinage :
- avec un alésage de logement de moteur (4) pour un moteur électrique (3) orienté à plomb dans une surface avant d'un corps de logement (19) en forme de bloc ;
- avec un carter de moteur (5) pour loger un palier de roulement (8) prévu pour un arbre de moteur (10) du moteur électrique (3) et fixé dans une section de carter de moteur (1) située du côté avant s'étendant par rapport à l'alésage de logement de moteur (4) ;
**caractérisé en ce qu'**un support de moteur (2) est fixé à la section de carter de moteur (1) située du côté avant, ce support plongeant dans l'alésage de logement de moteur (4), de sorte que le support de moteur (2) fixe le moteur électrique (3) à l'intérieur de l'alésage de logement de moteur (4).

2. Bloc moteur selon la revendication 1, **caractérisé en ce que** le support de moteur (2) est réalisé sous la forme d'une plaque de maintien comportant une saillie (6) radiale par rapport au diamètre extérieur du carter de moteur (5) au niveau de sa périphérie extérieure, cette saillie entrant de préférence en prise, au moyen d'un ajustage serré, avec la paroi intérieure de l'alésage de logement de moteur (4).

3. Bloc moteur selon la revendication 1 ou 2, **caractérisé en ce que** le support de moteur (2) est réalisé sous la forme d'un disque annulaire comportant une ceinture (7), tant au niveau de sa saillie (6) radiale pour la fixation dans l'alésage de logement de moteur (4) que pour la fixation à la section de carter de moteur (1) de côté avant, au niveau de sa périphérie intérieure.

4. Bloc moteur selon la revendication 3, **caractérisé en ce que** le support de moteur (2) est fabriqué par estampage et emboutissage d'une tôle fine.

5. Bloc moteur selon la revendication 3, **caractérisé en ce que** la ceinture (7) prévue au niveau de la périphérie intérieure du support de moteur (2) en forme de disque annulaire est directement fixée par complémentarité de frottements à une saillie (9) s'engrenant autour du palier (8), cette saillie formant un composant de la section de carter de moteur (1) située du côté avant.

6. Bloc moteur selon la revendication 1, **caractérisé en ce qu'**une section de carter de moteur (12) de côté avant supplémentaire est prévue sur le côté avant, opposé à la section de carter de moteur (1), du moteur électrique (3), ladite section logeant de préférence l'arbre de moteur (10) dans un palier (11) supplémentaire.

7. Bloc moteur selon la revendication 6, **caractérisé en ce que** la section de carter de moteur (12) de côté avant supplémentaire est réalisée sous la forme d'une plaque de support de brosses pour loger plusieurs brosses (14) dans des porte-balais.

8. Bloc moteur selon la revendication 6, **caractérisé en ce que** de façon connexe au palier de roulement (11) supplémentaire, l'arbre de moteur (10) supporte un commutateur (13) interagissant avec plusieurs brosses (14) d'une plaque de support de brosses.

9. Bloc moteur selon la revendication 6, **caractérisé en ce qu'**un bouchon de fixation (15) est enfilé au-dessus de la section de carter de moteur (12) de côté avant supplémentaire s'étendant jusqu'à la mise en contact axial d'un niveau de carter (16) dans l'alésage de logement de moteur (4).

10. Bloc moteur selon la revendication 9, **caractérisé en ce que** le bouchon de fixation (15) comporte, dans la zone de la section de carter de moteur (12) de côté avant supplémentaire, une ouverture (17) dans laquelle le palier (11) supplémentaire ressort avec la section de carter de moteur (12) de côté avant supplémentaire s'engrenant autour du palier (11) supplémentaire.

11. Bloc moteur selon la revendication 10, **caractérisé en ce que** le logement de la section de carter de moteur (12) se produit avec un jeu radial à l'intérieur de l'ouverture (17) prévue dans le bouchon de fixation (15), de sorte que pendant l'enfilage du bouchon de fixation (15), aucune transmission de force ne se produit sur la section de carter de moteur (12).

12. Bloc moteur selon la revendication 9, **caractérisé en ce qu'**un espace intermédiaire (25) est prévu entre la paroi intérieure du bouchon de fixation (15) et la paroi extérieure de la section de carter de moteur (12) supplémentaire.

13. Bloc moteur selon la revendication 12, **caractérisé en ce que** l'espace intermédiaire (25) s'étend le long du carter de moteur (5) jusque que dans la section d'alésage (23) du corps de logement (19).

14. Bloc moteur selon la revendication 12 ou 13, **caractérisé en ce qu'**un élément annulaire (24) déformable de façon élastique est coincé dans l'espace intermédiaire (25) dans lequel le carter de moteur (5) est disposé.

15. Bloc moteur selon la revendication 10, **caractérisé en ce que** le palier (11) supplémentaire et/ou la section de carter de moteur (12) de côté avant supplémentaire est logé sans jeu dans l'ouverture (17) du bouchon de fixation (15).

16. Bloc moteur selon la revendication 9, **caractérisé en ce que** le bouchon de fixation (15) comporte, dans la zone de contact du niveau de carter (16), un bord (18) orienté vers l'extérieur dans le plan radial fixé tant par complémentarité de formes que de forces dans l'alésage de logement de moteur (4), au moyen d'une extrusion plastique du matériau, connexe à l'alésage de logement de moteur (4), du corps de logement (19), en direction du niveau de carter (16).
